# EUROPEAN PATENT APPLICATION

(11) **EP 3 343 058 A1**
(43) Date of publication of application: **04.07.2018**
(21) Application number: 16839381.7
(22) Date of filing: 26.08.2016
(51) Int. Cl.: F16F 1/06, C22C 21/00, F16F 1/02

(54) **WIRE MATERIAL FOR ELASTIC MEMBER, AND ELASTIC MEMBER**

(30) Priority: 26.08.2015 JP 2015167277
(71) Applicant: NHK Spring Co., Ltd., Yokohama-shi, Kanagawa 236-0004 (JP)
(72) Inventor: ONO, Yoshiki, Yokohama-shi Kanagawa 236-0004 (JP); KONOMI, Kazuhiko, Yokohama-shi Kanagawa 236-0004 (JP); SANO, Takamichi, Yokohama-shi Kanagawa 236-0004 (JP); OKABE, Satoshi, Yokohama-shi Kanagawa 236-0004 (JP); IMAMURA, Masaru, Yokohama-shi Kanagawa 236-0004 (JP)
(74) Representative: Hoffmann Eitle
(86) International application number: PCT/JP2016/075096
(87) International publication number: WO 2017/034034

(57) **Abstract**

A wire adapted to an elastic member according to the present invention is a wire adapted to an elastic member for manufacturing an elastic member. The wire adapted to an elastic member includes: a core that is made of metal or alloy and is elastically deformable; and an FRP layer configured to cover an outer surface of the core, and including fibers wound around the core, and thermosetting resin provided at least partially to the fibers and fixing the fibers to each other. A winding direction in which the fibers are wound around the core is along a direction of a tensile load out of the tensile load and a compressive load applied to the wire adapted to an elastic member based on a load applied from outside.

## Description

### Field

The present invention relates to a wire adapted to elastic members and an elastic member.

### Background

Weight reductions in parts mounted on a vehicle are conventionally considered as a measurement for improving fuel consumption of the vehicle. For example, there is a tendency to replace cast iron with aluminum alloy for a material of an engine block and to replace steel with magnesium alloy for a material of an engine cover and an oil pan.

From the viewpoint of reducing the weight of a vehicle, a reduction in the weight of a coil spring as a suspension spring of the suspension is widely considered. A wire adapted to elastic members having a fiber reinforced resin layer consisting of fibers such as carbon fibers wound around a core and resin is known as an exemplary wire adapted to elastic members capable of reducing the weight of the elastic member such as a coil spring (for example, see Patent Literature 1 and Patent Literature 2).

Patent Literature 1 describes a wire adapted to elastic members having an aluminum core and a carbon fiber reinforced resin layer in which fibers are wound on an outer periphery of the aluminum core in a mesh pattern. However, fibers wound around the core in a mesh pattern as described in Patent Literature 1 are likely to fracture due to buckling when torsional stress is applied to the fibers. The diameter of the wire therefore needs to be increased to secure the strength. With this construction, however, an effective reduction in weight and a necessary amount of flexure cannot be obtained, and there is a possibility of the wire not functioning as a coil spring.

As a technique to improve strength against torsional stress, Patent Literature 2 describes a wire adapted to elastic members in which fibers are wound around the core at a certain angle with respect to an axial direction of the core.

### Citation List

### Patent Literature

Patent Literature 1: Japanese Utility Model Application Publication No. S55-45076
Patent Literature 2: Japanese Patent Application Laid-open No. 2006-226327

### Summary

### Technical Problem

Patent Literature 2 describes an embodiment of a wire adapted to elastic members used for a small coil spring, however, a large-sized coil spring formed with a wire having a large diameter tolerable for a larger load is necessary for use as a suspension spring of a vehicle. In this point, Patent Literature 2 does not take account of fracture due to a reduction in the thickness of the wire, which is caused by a torsional load applied with the coil spring compressed. The thickness of the wire is reduced depending on the material of the core, and the wire therefore does not possess usable properties because of its low strength and a low modulus of rigidity.

To overcome the above-described problems, the present invention aims to provide a wire adapted to elastic members and an elastic member with which a reduction in weight and an increase in strength are both achieved. Solution to Problem

To solve the above-described problem and achieve the object, a wire adapted to an elastic member for manufacturing an elastic member according to the present invention includes: a core that is made of metal or alloy, and is elastically deformable; and an FRP layer configured to cover an outer surface of the core, the FRP layer including: fibers wound around the core; and thermosetting resin provided at least partially to the fibers and fixing the fibers to each other, wherein a winding direction in which the fibers are wound around the core is along a direction of a tensile load out of the tensile load and a compressive load applied to the wire adapted to an elastic member based on a load applied from outside.

Moreover, the above-described wire adapted to an elastic member according to the present invention, further includes an electric corrosion preventing unit made of an insulating material and provided between the core and the fibers.

Moreover, in the above-described wire adapted to an elastic member according to the present invention, the FRP layer has a fiber content of 50 vol% to 91 vol%.

Moreover, in the above-described wire adapted to an elastic member according to the present invention, the fibers are continuous along a circumferential direction around the core.

Moreover, in the above-described wire adapted to an elastic member according to the present invention, a central axis of the core and the winding direction of the fibers forms an angle that is larger than 40 degrees and equal to or smaller than 50 degrees.

Moreover, in the above-described wire adapted to an elastic member according to the present invention, the fibers are wound at a certain winding angle.

Moreover, in the above-described wire adapted to an elastic member according to the present invention, the core has a thermal expansion coefficient that is smaller than a thermal expansion coefficient of the FRP layer.

Moreover, in the above-described wire adapted to an elastic member according to the present invention, the core has a thermal expansion coefficient that is equal to or smaller than 45 × 10⁻⁶ /K.

Moreover, in the above-described wire adapted to an elastic member according to the present invention, the wire adapted to an elastic member has a modulus of rigidity that is equal to or greater than 12 GPa.

Moreover, in the above-described wire adapted to an elastic member according to the present invention, the wire adapted to an elastic member has static torsional strength that is equal to or greater than 500 MPa.

Moreover, in the above-described wire adapted to an elastic member according to the present invention, the core is made of aluminum alloy containing equal to or greater than 2% magnesium.

Moreover, an elastic member according to the present invention is manufactured by using the above-described wire adapted to an elastic member.

Moreover, in the above-described elastic member according to the present invention, the elastic member is manufactured by helically winding the wire adapted to an elastic member.

Moreover, in the above-described elastic member according to the present invention, the elastic member is a suspension spring of a vehicle.

### Advantageous Effects of Invention

According to the present invention, a reduction in weight and an increase in strength are both achieved.

### Brief Description of Drawings

FIG. 1 is a schematic view of a configuration of a coil spring according to an embodiment of the present invention.
FIG. 2 is a schematic view of a configuration of the main parts of the coil spring according to the embodiment of the present invention.
FIG. 3 includes schematic views of a configuration of the main parts of the coil spring according to the embodiment of the present invention.
FIG. 4 is a schematic view of a configuration of the main parts of the coil spring according to the embodiment of the present invention.
FIG. 5 is a schematic view of a configuration of a wire adapted to elastic members of which a coil spring according to the embodiment of the present invention is manufactured.
FIG. 6 is a schematic view of a configuration of a coil spring according a modification of the embodiment of the present invention.
FIG. 7 is a graph illustrating results of a pulsating torsional strength test according to examples of the present invention.

### Description of Embodiments

Aspects to embody the present invention (hereinafter referred to as "embodiments") will now be described with reference to the accompanying drawings. The drawings schematically illustrate the embodiments, and the relation between the thickness and the width of each portion and the ratio of the thickness between the portions may be different from those in the actual construction. The relation and the ratio of the sizes may be different throughout the drawings.

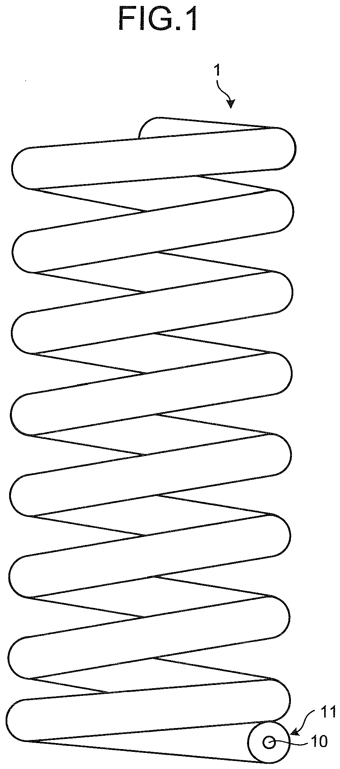

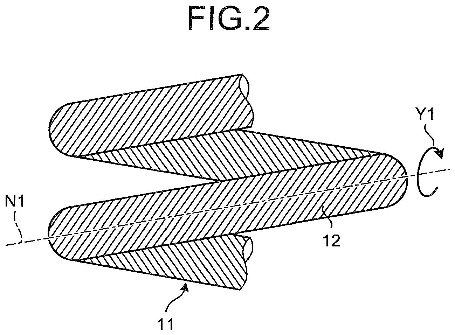

FIG. 1 is a schematic view of a configuration of a coil spring according to an embodiment of the present invention. FIG. 2 is a schematic view of a configuration of the main parts of the coil spring according to the embodiment of the present invention. A coil spring 1 is manufactured by helically winding a wire, which is formed with fibers wound around a core. The coil spring 1 is extensible in a certain direction (for example, in a direction in which the coil spring 1 extends by winding). For example, the coil spring 1 is used for a suspension spring of a suspension on a vehicle.

The coil spring 1 includes a core 10 made of metal or alloy metal and a fiber reinforced plastic (FRP) layer 11 having a plurality of fibers wound around the core 10 and covering the core 10, and the coil spring 1 is helically formed. As strength when the coil spring 1 is used as a suspension spring, the wire preferably has a modulus of rigidity of equal to or greater than 12 GPa and has a static torsional strength of equal to or greater than 500 MPa.

The core 10 is made of such a material that has a small weight compared with ferrous metals such as cast iron and has a high modulus of elasticity and has high strength compared with resin such as polypropylene so as not to be deformed or fractured due to tightening caused by shrinkage of the FRP layer 11. Examples of the material include aluminum, titanium, and aluminum-based, magnesium-based, or titanium-based alloys. More specifically, examples of an aluminum alloy having high strength include aluminum alloys of 2000 series, 5000 series, 6000 series, and 7000 series. In this embodiment, the sectional surface of the core 10 is in a circular shape. Instead of this shape, the sectional surface may be elliptically or polygonally shaped.

As illustrated in FIG. 2, the FRP layer 11 is formed by winding a plurality of reinforced fibers 12 around the core 10, impregnating the fibers with uncured thermosetting resin, and heating the fibers for curing. In another manner, the FRP layer 11 is formed by winding a plurality of reinforced fibers 12, which have been impregnated with uncured thermosetting resin, around the core 10 and heating the fibers for curing. At least one of fibers selected from carbon fiber, glass fiber, aramid fiber as aromatic polyamide fiber, and basalt fiber is used for the reinforced fiber 12. At least some of the reinforced fibers 12 on the FRP layer 11 are fixed to one another with the thermosetting resin. The FRP layer 11 includes the above-described reinforced fibers 12 and the thermosetting resin for fixing the reinforced fibers 12 to one another. Examples of the thermosetting resin include insulating and thermally curing resin such as epoxy resin.

With regards to the reinforced fibers 12 on the FRP layer 11, each fiber may be wound around the core 10 one by one, each bundle of fibers may be wound around the core 10 one by one, or a plurality of bundles may be wound together around the core 10. In any manner, the fibers are wound in the same direction. In still another manner, fiber bundles formed in a sheet are mounted on an outer surface of the core 10 with the fibers aligned in the longitudinal direction. A single or a plurality of (including fiber bundles) reinforced fibers 12 are wound in the radial direction of the wire.

From the viewpoint of durability of the reinforced fiber 12 to loads, the volume content (the proportion of the reinforced fiber 12 in the FRP layer 11 by volume) of the reinforced fiber 12 in the FRP layer 11 is preferably equal to or greater than 50 vol% and equal to or smaller than 91 vol%. The volume content smaller than 50% renders distribution of fibers uneven, which causes variations in strength. The volume content equal to or greater than 50% assures necessary evenness in fiber distribution to develop stable strength. When the reinforced fiber 12 is wound to the highest density, the reinforced fiber 12 can be wound up to 91% volume content. Additionally, to increase the strength of the coil spring 1 (the FRP layer 11), the reinforced fiber 12 is preferably continuous from an end to the other end of the helically extending wire. With a noncontinuous reinforced fiber 12, the wire cannot receive a load applied from outside using the whole part of the wire. Stress is thus focused on the noncontinuous part, from which fracture of the wire is likely to start. When the reinforced fiber 12 is continuous from an end to the other end of the wire, the reinforced fiber 12 helically extends from an end to the other end of the wire and is continuous along a circumferential direction around the core 10.

The thermal expansion coefficient of the core 10 is preferably smaller than that of the FRP layer 11. Specifically, the thermal expansion coefficient of the core 10 is preferably smaller than that of the FRP layer 11 and is equal to or greater than 45 × 10⁻⁶ /K. Here, the thermal expansion coefficient of the FRP layer 11 is the thermal expansion coefficient in the radial direction of the FRP layer 11.

When a core made of a material, for example, polypropylene, having a larger thermal expansion coefficient than that of the FRP layer 11, is used, the polypropylene core shrinks further than the FRP layer 11 when the temperature returns to the ordinary temperature from a temperature at which the thermosetting resin such as epoxy resin cures. The shrinkage generates a gap (clearance) between the core and the FRP layer 11. The clearance reduces the thickness of the wire constituting the coil spring 1, which causes easy fracture of the coil spring 1.

When a core made of a material, for example, aluminum, having a smaller thermal expansion coefficient than that of the FRP layer 11, is used, the core 10 less shrinks than the FRP layer 11 does when the temperature returns to the ordinary temperature from the temperature of curing. This construction causes no gaps (clearance) between the core 10 and the FRP layer 11. No gaps (clearance) between the core 10 and the FRP layer 11 occur, which can prevent fracture of the coil spring 1 caused due to a reduction in the thickness. The linear expansion coefficient of 1000 series aluminum is 23.6 × 10⁻⁶ /K, the linear expansion coefficient of 5000 series aluminum is 24.3 × 10⁻⁶ /K, the linear expansion coefficient of polypropylene is 81 to 100 (× 10⁻⁶ /K), and the linear expansion coefficient of epoxy resin is 45 to 65 (× 10⁻⁶ /K) (from Handbook of Chemistry, Applied Chemistry).

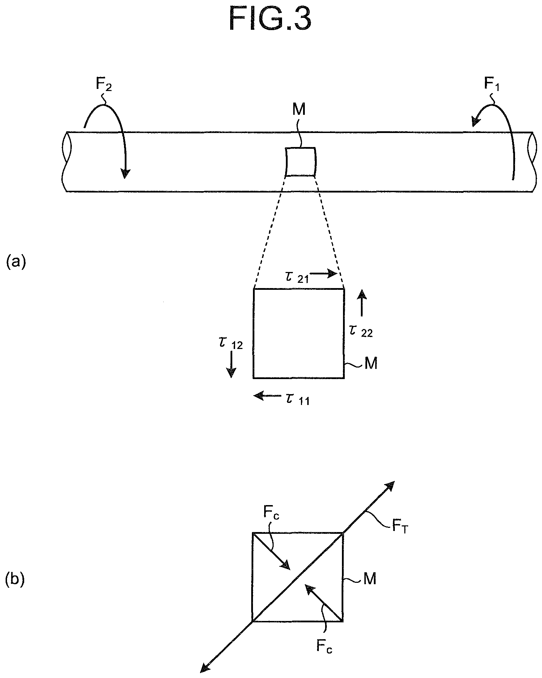

A winding direction Y1 (a direction in which the reinforced fiber 12 extends) in which the reinforced fiber 12 is wound around the core 10 is along a direction of a tensile load, out of the tensile load and a compressive load applied to the wire when a load compressing the coil spring 1 is applied from outside. FIG. 3 includes schematic views of a configuration of the main parts of the coil spring according to the embodiment of the present invention and are illustrative views of loads applied to a surface of the wire when a torsional stress is applied to the coil spring 1. When the torsional stress, which is a load caused around the central axis of the wire and consists of a load F₁ and a load F₂ caused in directions opposite to each other, is applied to the coil spring 1 (the wire), as viewed in a rectangular minor area M on the surface of the wire, the shear stresses τ₁₁, τ₁₂, τ₂₁, and τ₂₂ as illustrated in FIG. 3(a) are applied to the minor area M. Application of the shear stresses τ₁₁, τ₁₂, τ₂₁, and τ₂₂ to the wire means that the tensile load F_{T} and the compressive load F_{c} as illustrated in FIG. 3(b) are applied to the minor area M. The direction in which the tensile load F_{T} is applied is theoretically 45 degrees with respect to the longitudinal axis (an axis N1) of the wire; however, in consideration of variations in the shape of the wire, the angular range is larger than 40 degrees and equal to or smaller than 50 degrees.

The winding direction Y1 of the reinforced fiber 12 according to the embodiment is a direction along the above-described tensile load F_{T}. All the reinforced fibers 12 are wound along the tensile load F_{T}. The reinforced fiber 12 may be partially wound at a different winding angle; however, it is preferable to be wound around the core 10 at a certain winding angle. The "certain winding angle" includes a margin of error in the winding angle generated in the manufacturing process.

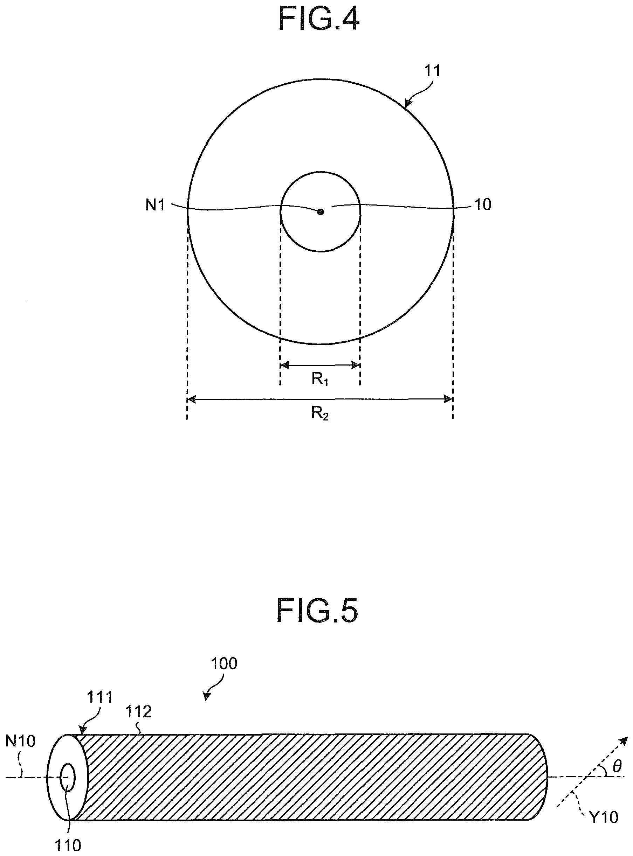

FIG. 4 is a schematic view of a configuration of the main parts of the coil spring according to the embodiment of the present invention and is a plan view when viewed from a direction of the central axis of the core 10. In the coil spring 1, as illustrated in FIG. 4, if the cross-sections, planar cut surfaces perpendicular to the longitudinal axis, of the core 10 and the FRP layer 11 are circular, the core is preferably made of aluminum alloy with fatigue strength of equal to or greater than τₘₐₓ × R₁ / R₂, where R₁ is the diameter of the core 10, R₂ is the diameter defined by the outer periphery of the FRP layer 11 and by the wire of the coil spring 1, and τₘₐₓ (MPa) is the maximum stress applied to the wire of the coil spring, in a three hundred thousand times pulsating torsion test. The maximum stress τₘₐₓ indicates a torsional stress applied to the outer surface of the wire.

Preferably, the core 10 is made of aluminum alloy with fatigue strength equal to or greater than τₘₐₓ × R₁ / R₂ in the three hundred thousand times pulsating torsion test, and the reinforced fiber 12 is made at least of carbon fiber. More preferably, the core 10 is made of aluminum alloy (for example, 5000 series) containing equal to or greater than 2% magnesium.

FIG. 5 is a schematic view of a configuration of a wire adapted to elastic members of which the coil spring 1 is manufactured. A wire adapted to elastic members 100 (hereinafter simply referred to as a "wire 100") illustrated in FIG. 5 is in a double-layered cylindrical shape having a cylindrical core 110 made of the same material as that of the core 10 and an FRP layer 111 formed with a reinforced fiber 112 made of the same fiber as that of the reinforced fiber 12 wound around an outer periphery of the core 110. The reinforced fiber 112 wound around the core 110 may be preliminarily impregnated with liquid thermosetting resin or may be impregnated with thermosetting resin after the reinforced fiber 112 is wound around the core 110. The reinforced fiber 112 impregnated with thermosetting resin is wound around the core 110 and is heated above a temperature at which the thermosetting resin cures, whereby the wire 100 with the reinforced fibers 112 fixed to one another is manufactured. For example, if an external load is applied to the coil spring 1 manufactured with the wire 100 helically wound, a winding direction Y10 (a direction in which the reinforced fiber 112 extends) in which the reinforced fiber 112 is wound around the core 110 is along the direction of the above-described tensile load. More specifically, when viewed from a direction perpendicular to the central axis (for example, an axis N10 illustrated in FIG. 5) of the core 110, an angle θ formed between the winding direction Y10 in which the reinforced fiber 112 is wound around the core 110 and the axis N10 is 40° < θ ≤ 50°. The angle θ corresponds to an angle formed between a direction of a torsional load applied to the reinforced fiber 112 based on the above-described tensile load and the central axis (the axis N10) of the core 110. Examples of the method of winding the reinforced fiber 112 around the core 110 include filament winding. In the use of a reinforced fiber bundle in which a plurality of reinforced fibers 112 are formed in a sheet, sheet winding is also applicable.

As described above, as the strength when using the wire 100 as a wire for a suspension spring, the wire 100 preferably has a modulus of rigidity of equal to or greater than 12 GPa and has static torsional strength of equal to or greater than 500 MPa.

The above-described coil spring 1 is manufactured with the wire 100 wound. The wire 100 can be used for an elastic member such as a torsion bar and a partially bent stabilizer other than the above-described coil spring 1.

According to the above-described embodiment of the present invention, a wire includes the core 10 that is made of metal or alloy and is elastically deformable, and the FRP layer 11 that is made of the reinforced fibers 12 wound around the core 10 and thermosetting resin fixing the reinforced fibers 12 to one another and covers the outer surface of the core 10. A winding direction in which the reinforced fiber 12 is wound around the core 10 corresponds to a direction along the tensile load applied to the wire based on the torsional stress. This construction allows the wire to have strength endurable to the torsional stress and allows a reduction in weight. For example, in the embodiment of the present invention, with the core 10 made of aluminum or aluminum alloy, the coil spring can be reduced in weight by 60% compared with a coil spring having properties of ferrous metals such as cast iron and having the same volume.

Furthermore, according to the embodiment of the present invention, with the core 10 made of metal or alloy having high rigidity compared with resin such as polypropylene, the fiber can be wound around the core 10 at higher tensile strength. Consequently, compared with resin such as polypropylene, this construction can achieve high fiber volume content (Vf) and a reduction in porosity and prevent a reduction in the thickness of the FRP layer 11 against force acting to reduce the thickness, which is generated by torsion applied to the wire when a load is applied in a direction compressing the coil spring 1. Moreover, higher rigidity of the core 10 allows the fiber to be wound at higher tensile strength. The wire therefore can be increased in rigidity, which enhances strength of the coil spring 1.

In the embodiment of the present invention, the core 10 is made of aluminum alloy having fatigue strength equal to or greater than τₘₐₓ × R₁ / R₂ in the three hundred thousand times pulsating torsion test, which can enhance the fatigue strength of the wire adapted to elastic members.

### Modification of embodiment

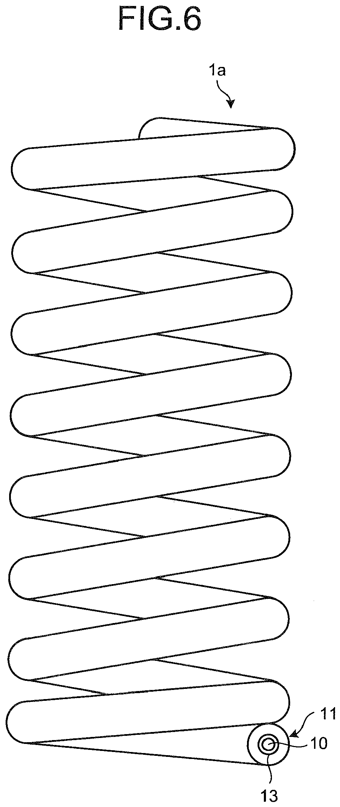

An insulating material including an insulating glass fiber reinforced plastic (GFRP) layer, an electric corrosion preventing layer (an electric corrosion preventing unit) constituted of an insulating oxide layer formed on a surface of the core 10, and others, may be provided between the core 10 and the FRP layer 11. FIG. 6 is a schematic view of a configuration of a coil spring according a modification of the embodiment. A coil spring 1a illustrated in FIG. 6 is provided with an electric corrosion preventing layer 13 made of an insulating material between the core 10 and the FRP layer 11. The electric corrosion preventing layer 13 is formed of an insulating oxide layer such as an insulating GFRP layer and anodized layer. The electric corrosion preventing layer 13 has a thickness (the thickness in the radial direction of the core 10) sufficiently large to secure insulation, for example, the GFRP layer may have a thickness of approximately 0.1 mm, which is sufficiently effective. Formation of the electric corrosion preventing layer 13 can prevent deterioration of the core 10 caused due to electric corrosion.

### Examples

Examples of a wire adapted to elastic members for manufacturing a coil spring according to the present invention will now be described. Constructions of a wire adapted to elastic members according to the examples will be described first.

### First Example

A rod-shaped aluminum alloy (5000 series) having a diameter ϕ of 7 mm was used for the core, and tow-prepreg as a carbon fiber bundle was used for the reinforced fiber. The 5000 series aluminum alloy is manufactured by being subjected to heat stabilizing treatment after the cold working. The 5000 series aluminum alloy is aluminum-based aluminum-magnesium alloy. The tow-prepreg is a bundle of 12000 carbon fibers containing 33 wt% epoxy resin.

In the wire adapted to elastic members, the tow-prepreg was wound around the above-described core with a filament winder. The carbon fiber was wound around the core in a manner forming a 45 degree angle with respect to the central-axis direction of the core when viewed from a direction perpendicular to the central axis of the core and was uninterruptedly wound around the core until the wire comes to have an outside diameter ϕ of 14 mm. A polypropylene tape having a width of 15 mm was wound around the uncured wire to fix the wire in a manner covering the entire surface of the wire from an end to the other end thereof, and the wire was heated in an oven to cure the epoxy resin. The obtained wire was used as a wire adapted to elastic members according to the first example.

### Second Example

In this example, the processes were carried out in the same manner as those of the first example except that a rod-shaped aluminum material (1000 series) having a diameter ϕ of 7 mm was used for the core. The 1000 series aluminum is pure aluminum having purity equal to or greater than 99.7%, which is formed through the work hardening after the cold working. The obtained wire was used as a wire adapted to elastic members according to the second example.

### Comparative Example

In the comparative example, the processes were carried out in the same manner as those of the first example except that a rod-shaped polypropylene (PP) resin material having a diameter ϕ of 7 mm was used for the core. The obtained wire was used as a wire adapted to elastic members according to the comparative example.

The details of the tests according to the examples will now be described.

### Torsional strength test

A tri-axis strain gauge was attached to the center on the surface in the longitudinal direction of the wire obtained in the above-described manner. An end of the wire was held by a holding member made of glass fiber reinforced plastic (GFRP). A torsional strength test was carried out using a torsion testing machine of Takachihoseiki Co., LTD. This torsion test was carried out with a rotational speed around the central axis of the wire of 0.3 degrees per second. In this torsional strength test, static torsional strength of the wire (a carbon fiber) was calculated.

### Modulus of rigidity

The modulus of rigidity was calculated based on the inclination of the stress-strain curve obtained in the above-described torsional strength test.

### The stress reduction rate

A pulsating torsional fatigue test was carried on each obtained wire. Specifically, in the pulsating test with a maximum stress of 260 MPa and a stress ratio of 0.1, the torsional stress was measured by applying a torsional load to the wire at a certain angle. After three hundred thousand times of repetition of this process, the stress reduction rate was calculated based on the torsional stress obtained in the initial measurement and the torsional stress obtained in each measurement. Each stress reduction rate is a value normalized with the maximal value of the stress reduction rate measured in the comparative example (polypropylene) set as 1.

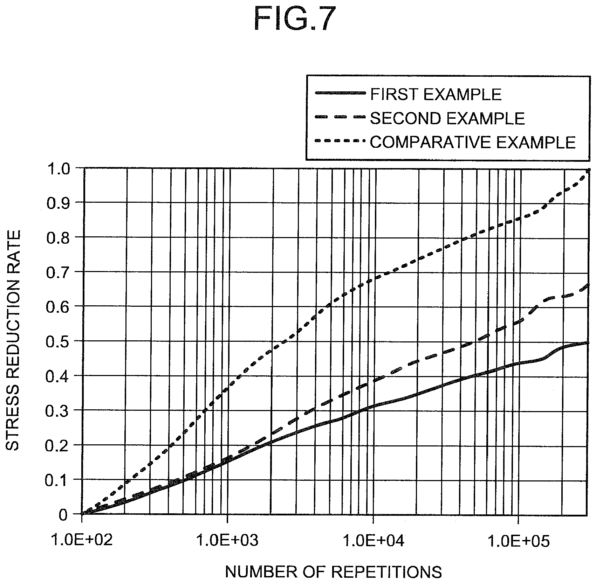

Results (torsional strength and the modulus of rigidity) of the torsion tests on the wires adapted to elastic members according to the examples will now be described with reference to Tables 1 and 2 and FIG. 7. Table 1 illustrates results of the test carried on the wires adapted to elastic members according to the first and the second examples and the comparative example. Table 2 illustrates the proportional limits in the torsional stress of the cores used in the first and the second examples. FIG. 7 is a graph illustrating results of the pulsating torsional fatigue test according to the examples of the present invention.

**Table 1**

| | Core | Torsional strength (MPa) | Modulus of rigidity (GPa) | Maximal stress reduction rate |
|---|---|---|---|---|
| First Example | 5000 series Al | >937 | 17.0 | 0.5 |
| Second Example | 1000 series Al | 822 | 16.7 | 0.7 |
| Comparative Example | PP | 461 | 8.3 | 1.0 |

**Table 2**

| | Proportional limit in the torsional stress (MPa) |
|---|---|
| 5000 series Al | 130 |
| 1000 series Al | 35 |

As seen in Table 1, the wires having cores made of 1000 series and 5000 series aluminum materials possess high moduli of rigidity and high strength. In the first example, the torsional strength is at least 937 MPa, which exceeds the upper limit in the measurement of this test system. As illustrated in FIG. 7, in the first and the second examples, the stress reduction rates obtained through the three hundred thousand times repetition are small compared with the comparative example. The wires according to the first and the second examples are superior in terms of the modulus of rigidity, strength, and durability. Coil springs for practical use therefore can be obtained by using these wires.

If the above-described coil spring 1 is used as a suspension spring of a suspension, a wire adapted to elastic members of which the coil spring 1 is manufactured preferably has a modulus of rigidity of equal to or greater than 12 GPa and has static torsional strength of equal to or greater than 500 MPa, for example. In this case, because torsional stress of 100 MPa derived from τₘₐₓ × R₁ / R₂ is applied to the core, as is clear from the proportional limits in the torsional stress indicated in Table 2, the core is preferably manufactured from a 5000 series aluminum material rather than a 1000 series aluminum material. If the torsional stress exceeds the proportional limit, the core fractures and a gap is accordingly generated. Effects of preventing crush of the coil spring cannot be achieved on the fractured portion. The difference in the stress reduction rate between the 1000 series aluminum and the 5000 series aluminum results from the proportional limits in the torsional stress. Based on the results of these examples, the wire adapted to elastic members according to the first example sufficiently fulfills requirements as a wire used for the coil spring 1 for a suspension.

The present invention can include various embodiments and others that are not herein described, and various changes in the design and others can be made without departing from the technical thought specified by the appended claims.

### Industrial Applicability

As described above, the wire adapted to elastic members and the elastic member according to the present invention have durability to a torsional load and are preferable in reducing the weight.

### Reference Signs List

- 1, 1a: coil spring
- 10, 110: core
- 11, 111: fiber reinforced plastic (FRP) layer
- 12, 112: reinforced fiber
- 13: electric corrosion preventing layer
- 100: wire adapted to elastic members

## Claims

1. A wire adapted to an elastic member for manufacturing an elastic member, comprising:
a core that is made of metal or alloy, and is elastically deformable; and
an FRP layer configured to cover an outer surface of the core, the FRP layer including:
fibers wound around the core; and
thermosetting resin provided at least partially to the fibers and fixing the fibers to each other,
wherein a winding direction in which the fibers are wound around the core is along a direction of a tensile load out of the tensile load and a compressive load applied to the wire adapted to an elastic member based on a load applied from outside.

2. The wire adapted to an elastic member according to claim 1, further comprising an electric corrosion preventing unit made of an insulating material and provided between the core and the fibers.

3. The wire adapted to an elastic member according to claim 1 or 2, wherein the FRP layer has a fiber content of 50 vol% to 91 vol%.

4. The wire adapted to an elastic member according to any one of claims 1 to 3, wherein the fibers are continuous along a circumferential direction around the core.

5. The wire adapted to an elastic member according to any one of claims 1 to 4, wherein a central axis of the core and the winding direction of the fibers forms an angle that is larger than 40 degrees and equal to or smaller than 50 degrees.

6. The wire adapted to an elastic member according to claim 5, wherein the fibers are wound at a certain winding angle.

7. The wire adapted to an elastic member according to claim 1, wherein the core has a thermal expansion coefficient that is smaller than a thermal expansion coefficient of the FRP layer.

8. The wire adapted to an elastic member according to claim 7, wherein the core has a thermal expansion coefficient that is equal to or smaller than 45 × 10⁻⁶ /K.

9. The wire adapted to an elastic member according to any one of claims 1 to 8, wherein the wire adapted to an elastic member has a modulus of rigidity that is equal to or greater than 12 GPa.

10. The wire adapted to an elastic member according to any one of claims 1 to 9, wherein the wire adapted to an elastic member has static torsional strength that is equal to or greater than 500 MPa.

11. The wire adapted to an elastic member according to any one of claims 1 to 10, wherein the core is made of aluminum alloy containing equal to or greater than 2% magnesium.

12. An elastic member manufactured by using the wire adapted to an elastic member according to any one of claims 1 to 11.

13. The elastic member according to claim 12, wherein the elastic member is manufactured by helically winding the wire adapted to an elastic member.

14. The elastic member according to claim 13, wherein the elastic member is a suspension spring of a vehicle.
